# EUROPEAN PATENT APPLICATION

(11) **EP 4 082 965 A1**
(43) Date of publication of application: **02.11.2022**
(21) Application number: 20905879.1
(22) Date of filing: 25.12.2020
(51) Int. Cl.: C01B 25/45, H01M 4/62, H01M 10/052, H01M 10/0562, H01B 1/06, H01B 1/08, C04B 35/447, C04B 35/495

(54) **LITHIUM ION-CONDUCTIVE OXIDE AND USE FOR SAME**

(30) Priority: 27.12.2019 JP 2019238566
(71) Applicant: Showa Denko K.K., Tokyo 105-8518 (JP)
(72) Inventor: SEI, Ryosuke, Tokyo 105-8518 (JP); LEE, Kunchan, Tokyo 105-8518 (JP)
(74) Representative: Strehl Schübel-Hopf & Partner
(86) International application number: PCT/JP2020/048785
(87) International publication number: WO 2021/132581

(57) **Abstract**

The present invention aims to provide a lithium ion-conducting oxide capable of providing a solid electrolyte with an excellent ion conductivity, and a solid electrolyte, a sintered body, an electrode material or an electrode and an all-solid-state battery using the same. The lithium ion-conducting oxide of the present invention includes at least lithium, tantalum, phosphorus, silicon, and oxygen as constituent elements, has a peak in a region of -20.0 ppm to 0.0 ppm on the solid-state ³¹P-NMR spectrum, and has a peak in a range of -80.0 ppm to -100.0 ppm on the solid-state ²⁹Si-NMR spectrum.

## Description

### Technical Field

The present invention relates to a lithium ion-conducting oxide, and a solid electrolyte, a sintered body, an electrode material or an electrode and an all-solid-state battery using the same.

### Background Art

In recent years, the development of high output and high capacity batteries are required for the power sources for laptop computers, tablet devices, mobile phones, smartphones, and electric vehicles (EV). Among these, an all-solid lithium-ion battery using a solid electrolyte in place of a liquid electrolyte such as an organic solvent has been expected for the excellent charging/discharging efficiency, charging speed, safety, and productivity.

As the lithium-ion conducting solid electrolyte, a sulfide solid electrolyte is known; however, from a viewpoint of safety, an oxide solid electrolyte is preferred. As the oxide solid electrolyte, for example, Patent Literature 1 discloses a perovskite ion-conducting oxide including lithium and having SrZrO₃ as a base constituent. Non Patent Literature 1 describes LiTa₂PO₈ having a monoclinic crystal structure.

The ion-conducting oxide disclosed in Patent Literature 1 enhances the electrical conductivity at the grain boundaries by having a base composition in which the Sr site or the Zr site is replaced with other elements; however the conductivity is not yet sufficient, and demands have been lying for a high lithium ion conductivity at the grain boundaries and for the enhancement in the total ion conductivity of the lithium ion conductivities inside the crystal grains and at the grain boundaries. Further, the total lithium ion conductivity of LiTa₂PO₈ disclosed in Non Patent Literature 1 is 2.48 × 10⁻⁴ (S/cm), which is, for example, lower than the perovskite compound disclosed in Patent Literature 1.

### Citation List

### Patent Literature

Patent Literature 1: JP2016-169145A
Patent Literature 2: JP2018-49834A

### Non Patent Literature

Non Patent Literature 1: J. Kim et al., J. Mater. Chem. A, 2018, 6, p22478-22482

### Summary of Invention

### Technical Problem

The present invention aims to provide a lithium ion-conducting oxide capable of providing a solid electrolyte with an excellent ion conductivity, and a solid electrolyte, a sintered body, an electrode material or an electrode and an all-solid-state battery using the same.

### Solution to Problem

The present inventors conducted extensive studies in view of the situation and consequently found that an oxide including lithium, tantalum, phosphorus, and silicon and having a specific nuclear magnetic resonance (NMR) spectral peak shows a high lithium ion conductivity, whereby the present invention has been accomplished.

The conventional technologies described in the above Patent Literature 1 and Non Patent Literature 1 do not disclose or suggest that the lithium ion-conducting oxide having lithium, tantalum, phosphorus, and oxygen as the constituent elements enhances the total ion conductivity of the lithium ion conductivities inside the crystal grains and at the grain boundaries. Patent Literature 2 discloses a solid electrolyte having a specific NMR spectral peak but does not teach the configurations according to the invention of the present application.

The present invention relates to the matters of the following [1] to [7].
[1] A lithium ion-conducting oxide, including:
   at least lithium, tantalum, phosphorus, silicon, and oxygen as constituent elements,
   wherein the lithium ion-conducting oxide has a peak in a region of -20.0 ppm to 0.0 ppm on a solid-state ³¹P-NMR spectrum, and
   wherein the lithium ion-conducting oxide has a peak in a region of -80.0 ppm to -100.0 ppm on a solid-state ²⁹Si-NMR spectrum.
[2] The lithium ion-conducting oxide according to [1], wherein the lithium ion-conducting oxide has only one peak in a region of -20.0 ppm to 0.0 ppm on the solid-state ³¹P-NMR spectrum.
[3] The lithium ion-conducting oxide according to [1] or [2], wherein a content rate of a monoclinic crystal structure determined by an X-ray diffraction measurement method is 70% or more.
[4] A solid electrolyte composed of the lithium ion-conducting oxide according to any one of [1] to [3].
[5] A sintered body composed of the lithium ion-conducting oxide according to any one of [1] to [3].
[6] An electrode material or an electrode including the lithium ion-conducting oxide according to any one of [1] to [3].
[7] An all-solid-state battery including the lithium ion-conducting oxide according to any one of [1] to [3].

### Advantageous Effects of Invention

The present invention can accordingly provide a lithium ion-conducting oxide that can be used as a highly safe oxide solid electrolyte which shows an excellent ion conductivity when used as a solid electrolyte, and a solid electrolyte, a sintered body, an electrode material or an electrode and an all-solid-state battery using the same.

### Brief Description of Drawings

[Figure 1] Figure 1 shows the solid-state ³¹P-NMR spectrum measurement results of the lithium ion-conducting oxides obtained in Examples and Comparative Example.
[Figure 2] Figure 2 shows the solid-state ²⁹Si-NMR spectrum measurement results of the lithium ion-conducting oxides obtained in Examples and Comparative Example.

### Description of Embodiments

Hereinafter, preferable embodiments of the present invention will be described in detail.

### <Lithium ion-conducting oxide>

### (Constituent elements)

The lithium ion-conducting oxide according to the present invention includes at least lithium (Li), tantalum (Ta), phosphorus (P), silicon (Si), and oxygen (O) as constituent elements.

The lithium ion-conducting oxide in a preferable embodiment of the present invention has a base constituent in which a part of P in LiTa₂PO₈ is replaced with an element M including Si. The element M herein indispensably includes Si and can also include an element selected from the group consisting of elements of the Group 14 (provided that carbon is excluded) other than Si, and Al, but substantially only Si is preferred. That is, the lithium ion-conducting oxide according to the present invention preferably has a base constituent in which a part of P in LiTa₂PO₈ is replaced with Si.

When the element M includes only Si, a ratio of number of lithium, tantalum, phosphorus, silicon, and oxygen atoms (Li : Ta : P : Si : O) of the conducting oxide is 1 : 2 : (1-y) : y : 8, wherein y is preferably more than 0 and less than 0.7.

The lithium ion-conducting oxide in a preferable embodiment of the present invention can also be called a lithium ion-conducting oxide composed of specific oxides containing lithium. However, this does not strictly exclude the presence of impurities in the lithium ion-conducting oxide, and it is permissible for the lithium ion-conducting oxide of the present invention to include inevitable impurities caused from raw materials and/or from the production process and impurities having other crystal systems within the range of not deteriorating the lithium ion conductivity.

The ratio of number of atoms of the elements constituting the lithium ion-conducting oxide in a preferable embodiment of the present invention can be determined using absolute intensity quantification by auger electron spectroscopy (AES) with, for example, a standard powder sample containing Mn, Co, and Ni in a ratio of 1 : 1 : 1 as a lithium-containing transition metal oxide such as LiCoO₂.

The lithium ion-conducting oxide in a preferable embodiment of the present invention can be represented by the following formula (1).

LiTa₂P_{1-y}M_{y}O₈ ··· (1)

In the above formula (1), the element M, as described above, indispensably includes Si and can also include an element selected from the group consisting of elements of the Group 14 other than Si, and Al, but substantially only Si is preferred. Examples of the element of the Group 14 other than Si include Ge.

The content of the element M including Si represented by y in the above formula (1) is more than 0 and less than 0.7. This content range, in terms of percentage of the number of atoms of the element M relative to the total number of atoms of the elements phosphorus and the element M, is more than 0.0 and less than 70.0. The lower limit of the element M content, when represented by y in the above formula (1), is preferably 0.01, more preferably 0.02, and further preferably 0.03. The upper limit of the element M content is preferably 0.65, more preferably 0.60, and further preferably 0.55. Further, the Si content in the element M, in terms of percentage of the number of atoms, is 1 or more, preferably 50 or more, more preferably 70 or more, and further preferably 90 or more, and most preferably 100.

When the element M includes only Si in the above, the lithium ion-conducting oxide in a preferable embodiment of the present invention can be represented by the following formula (2).

LiTa₂P_{1-y}Si_{y}O₈ ··· (2)

When an element M content in the lithium ion-conducting oxide is in the above range, the total ion conductivity of the lithium ion conductivities inside the crystal grains and at the grain interfaces (grain boundaries) to be described later is high. The element M content can be determined by a conventionally known quantification analysis in terms of percentage of the number of atoms of the element M relative to the total number of atoms of phosphorus and the element M. For example, the element M content can be determined by adding acid to a sample to thermally decompose, then volume-fixing the pyrolysate and using a high frequency inductively coupled plasma (ICP) atomic emission spectroscopy. In the method for producing a lithium ion-conducting oxide to be described later, the percentage of the number of atoms of the element M relative to the total number of atoms of phosphorus and the element M can be simply calculated from feeding amounts of raw materials in terms of a doping amount of the element M since phosphorus and the element M do not efflux from the system.

As described above, the element M includes Si, and can also include an element selected from the group consisting of elements of the Group 14 (provided that carbon is excluded) other than Si, and Al. Examples of the element other than Si that can be included in the element M include Ge and Al, of which Al is preferred. The element M is preferably substantially only Si. When the element M includes only Si, a lithium ion conductivity particularly at the grain boundaries is higher, hence preferred.

With a focus on the valence of the constituent elements of the lithium ion-conducting oxide, the valence of the element M to be doped has a different valence from that of phosphorus, and thus the lithium contained in the lithium ion-conducting oxide conceivably increases and decreases to balance the charge neutrality. For example, when an increased and decreased amount caused by the charge balance associated with replacing P with the element M is represented by x, the lithium ion-conducting oxide can be represented by the following formula (3).

Li₁₊ₓTa₂P_{1-y}M_{y}O₈ ··· formula (3)

In the lithium ion-conducting oxide according to the present invention herein, the element M preferably includes only Si and can be represented by the following formula (4).

Li₁₊ₓTa₂P_{1-y}Si_{y}O₈ ··· formula (4)

### (Content rate of monoclinic crystal)

The lithium ion-conducting oxide in a preferable embodiment of the present invention has a content rate of monoclinic crystal structure (simply described as "content rate of the monoclinic crystal" in the following), when confirmed in the X-ray diffraction (XRD) measurement, of typically 60% or more, preferably 70% or more, more preferably 80% or more, and further preferably 90% or more. The content rate of the monoclinic crystal structure can be determined by the method using the Rietveld analysis to be described later in an example. When a content rate of the monoclinic crystal is in the range described above, the lithium ion conductivity in total tends to be higher.

### (Other crystal structures)

When the lithium ion-conducting oxide is insufficiently calcined in the production method to be described later and thus raw materials remain, diffraction peaks derived from raw materials can be confirmed in the X-ray diffraction measurement. The presence of lithium carbonate (Li₂CO₃), tantalum pentoxide (Ta₂O₅), oxides of the element M such as silicon dioxide (SiO₂), and diammonium hydrogen phosphate ((NH₄)₂HPO₄) to be used as raw materials can be confirmed by the X-ray diffraction measurement. These raw material compounds do not have the lithium ion conductivity and thus are preferably not included. Additionally, in the case of insufficient calcining, the presence of by-products can be confirmed in the X-ray diffraction measurement as diffraction peaks derived from the by-products. Specifically, lithium tantalate (LiTaO₃) , Li₃PO₄, TaPO₅, and Ta₂O₅ can be observed; however, it is preferred that these by-products be not included because they have low lithium ion conductivity.

### (Nuclear magnetic resonance (NMR) spectrum)

The lithium ion-conducting oxide according to the present invention has a peak in a region of -20.0 ppm to 0.0 ppm on the solid-state ³¹P-NMR spectrum, and a peak in a region of -80.0 ppm to -100.0 ppm on the solid-state ²⁹Si-NMR spectrum. The lithium ion-conducting oxide having such features shows a high lithium ion conductivity.

The lithium ion-conducting oxide according to the present invention preferably has only one peak in a region of -20.0 ppm to 0.0 ppm on the solid-state ³¹P-NMR spectrum. When the lithium ion-conducting oxide has only one peak, not two or more, in a region of -20.0 ppm to 0.0 ppm on the solid-state ³¹P-NMR spectrum, the lithium ion-conducting oxide shows a sufficient content of Si atoms, hence preferred.

The lithium ion-conducting oxide having a peak in a region of -20.0 ppm to 0.0 ppm on the solid-state ³¹P-NMR spectrum shows the presence of a P-O-Ta bond in the lithium ion-conducting oxide. The lithium ion-conducting oxide having a peak in a region of -80.0 ppm to -100.0 ppm on the solid-state ²⁹Si-NMR spectrum shows the presence of a Si-O-Ta bonds in the lithium ion-conducting oxide. That is, having the above 2 peaks means that the lithium ion-conducting oxide has the crystal structure having a high ion conductivity.

Even when the lithium ion-conducting oxide according to the present invention either does not have a peak in a region other than -20.0 ppm to 0.0 ppm or has a peak in a region other than -20.0 ppm to 0.0 ppm on the solid-state ³¹P-NMR spectrum, a strength ratio to the peak within the range from -20.0 ppm to 0.0 ppm is 0.5 or less. Further, even when the lithium ion-conducting oxide according to the present invention either does not have a peak in a region other than -80.0 ppm to -100.0 ppm or has a peak in a region other than -80.0 ppm to -100.0 ppm on the solid-state ²⁹Si-NMR spectrum, a strength ratio to the peak within the range from -80.0 ppm to -100.0 ppm is 0.5 or less.

### (Lithium ion conductivity in total)

The lithium ion conductivity in total of the lithium ion-conducting oxide is the total ion conductivity of the lithium ion conductivities inside the crystal grains and the grain boundaries and can be determined by, for example, the impedance measurement of an ion conductivity evaluation described in an example to be described later. The lithium ion-conducting oxide preferably has a lithium ion conductivity in total δₜₒₜₐₗ (25°C) measured at 25°C of 1.50 × 10⁻⁴ (S/cm) or more. The lower limit of the lithium ion conductivity in total δₜₒₜₐₗ (25°C) is more preferably 1.55 × 10⁻⁴ (S/cm), further preferably 2.00 × 10⁻⁴ (S/cm), and further preferably 2.50 × 10⁻⁴ (S/cm). The lithium ion-conducting oxide in a preferable embodiment of the present invention described above is not particularly limited in the purpose of use but can be particularly preferably used as a solid electrolyte for a lithium-ion secondary battery.

### (Lithium ion conductivity at the grain boundaries)

The lithium ion conductivity at the grain boundaries of the lithium ion-conducting oxide can be determined by, for example, the impedance measurement as in the lithium ion conductivity in total described above. The lithium ion-conducting oxide preferably has a lithium ion conductivity δ_{gb} (25°C) at the grain boundaries measured at 25°C of 3.00 × 10⁻⁴ (S/cm) or more. The lower limit of the lithium ion conductivity δ_{gb} (25°C) at the grain boundaries is more preferably 3.50 × 10⁻⁴ (S/cm), and further preferably 4.00 × 10⁻⁴ (S/cm). The lithium ion-conducting oxide in a preferable embodiment of the present invention described above is not particularly limited in the purpose of use but can be particularly preferably used as a solid electrolyte for a lithium-ion secondary battery.

### (Median diameter of crystal grains)

The median diameter of crystal grains included in the lithium ion-conducting oxide is, in terms of the arithmetical mean of crystal grain diameters, preferably 6.0 µm or less, more preferably 3.0 µm or less, and further preferably 1.5 µm or less. The median diameter of crystal grains included in the lithium ion-conducting oxide is determined by obtaining a transmitted image of the lithium ion-conducting oxide pellets prepared by the method to be described later using a transmission electron microscope (TEM) at a magnification of x1000 or more and measuring grain diameters of at least 100 crystal grains in any area with 100-µm square. Crystal grains are not in complete spherical shape and hence the longest diameter is defined as the grain diameter of a crystal grain. In the present description, the longest diameter of a crystal grain means the length of the longest diagonal of a polygon forming an outline of the crystal grain determined as below.

In a transmitted image of the lithium ion-conducting oxide, the outline of a crystal grain is observed as a convex polygon on a plane field of view. Of the diagonals with a plurality of lengths in the convex polygon, the length of the longest diagonal is defined as the longest diameter of the crystal grain.

The crystal grain including lithium, tantalum, phosphorus, silicon, and oxygen as the constituent elements can also be distinguished from other crystal grains based on the difference in the elements contained in crystal grains using an energy dispersive X-ray spectroscopy (EDX) analyzer attached to TEM equipment.

### <Method for producing the lithium ion-conducting oxide>

The method for producing the lithium ion-conducting oxide in a preferable embodiment of the present invention is not particularly limited as long as a lithium ion-conducting oxide within the above constituent ranges can be obtained. For the production method, for example, the solid-phase reaction and the liquid-phase reaction can be employed. Hereinafter, the production method using the solid-phase reaction will be described in detail.

An example of the production method by the solid-phase reaction is a production method at least having one mixing step and one sintering step.

### • Mixing step

In the mixing step, compounds including lithium atoms(s), tantalum atom(s), and the elements M including silicon atom(s), respectively, and phosphate are mixed.

The compound containing lithium atom(s) is not particularly limited, and inorganic compounds are preferable due to easy handleability, and examples of the inorganic compound containing lithium atom(s) include lithium compounds such as lithium carbonate (Li₂CO₃) and lithium oxide (Li₂O). These lithium compounds can be used singly, or in combinations of two or more thereof. Lithium carbonate (Li₂CO₃) is preferably used due to easy decomposition and reaction.

The compound containing tantalum atom(s) are not particularly limited, and inorganic compounds are preferable due to easy handleability, and examples include tantalum compounds such as tantalum pentoxide (Ta₂O₅) and titanium nitrate (Ta(NO₃)₅). These tantalum compounds can be used singly, or in combinations of two or more thereof. Tantalum pentoxide (Ta₂O₅) is preferably used from a viewpoint of costs.

The compound containing the element M including silicon atom(s) is not particularly limited, but an inorganic compound is preferred due to easy handleability, and examples include a simple or an oxide of the element M. These substances can be used singly, or two or more can be used in combination. Among these, an oxide is preferably used from a viewpoint of easy handleability. Specifically, when the element M includes only silicon atom(s), silicon dioxide (SiO₂) can be used. Further, when the element M includes Ge or Al in addition to silicon atom(s), germanium dioxide (GeO₂) or aluminum oxide (Al₂O₃) can be used with silicon dioxide (SiO₂) .

The phosphate is not particularly limited, and examples include phosphates such as diammonium hydrogen phosphate ((NH₄)₂HPO₄) and ammonium dihydrogen phosphate (NH₄H₂PO₄) due to easy decomposition and reaction. These phosphates can be used singly, or in combinations of two or more thereof.

For the mixing method of the raw materials described above, a method that can be used is a roll tumbling mill, a ball mill, a small-diameter ball mill (bead mill), a medium stirring mill, an airflow grinding mill, a mortar, an automatic kneading mortar, a tank mill, or a jet mill. The ratio of the raw materials to be mixed is, simply speaking, a stoichiometric ratio so that the composition of the formula (1) described above is achieved. More specifically, lithium atoms are likely to efflux from the system in the sintering step to be described later, and thus the compound containing lithium atom(s) described above can be adjusted by adding about 10 to 20% excess.

The mixing can be carried out under the atmosphere. A gas atmosphere of a nitrogen gas and/or an argon gas with an adjusted oxygen gas content is more preferred.

### • Calcining step

In the calcining step, the mixture obtained in the mixing step is calcined. When the calcining step is carried out several times such as a 2-phase step of low-temperature calcining and high-temperature calcining, a pulverizing step using, for example, a ball mill or a mortar can be provided between the calcining steps for the purpose of pulverizing or downsizing diameter of the primary calcined product.

The calcining step can be carried out under the atmosphere. A gas atmosphere of a nitrogen gas and/or an argon gas with an adjusted oxygen gas content is more preferred.

The calcining temperature is preferably in a range from 800 to 1200°C, more preferably in a range from 950 to 1100°C, and further preferably in a range from 950 to 1000°C. When the calcining is carried out at 800°C or more, the element M including silicon is sufficiently solid-soluted and the ion conductivity is enhanced, whereas when the temperature is 1200°C or less, lithium atoms are less likely to efflux from the system, hence preferred. The calcining time is preferably 30 minutes to 16 hours, and preferably 3 to 12 hours. When the calcining time is in the range described above, the ion conductivity is likely to be higher and well-balanced in both inside the crystal grains and at the grain boundaries, hence preferred. When the calcining time is longer than the ranges described above, lithium atoms are likely to efflux from the system.
The calcining time and temperature are adjusted in coordination with each other.

When the calcining step is, for example, a 2-phase step of low-temperature calcining and high-temperature calcining, a preliminary calcining at a low temperature can be carried out at 400 to 800°C for 30 minutes to 12 hours.

High-temperature calcining can be carried out twice for preventing by-products from remaining. In the second calcining step, the calcining temperature is preferably in a range from 800 to 1200°C, more preferably in a range from 950 to 1100°C, and further preferably in a range from 950 to 1000°C. The calcining time at each calcining step is preferably 30 minutes to 8 hours, and preferably 2 to 6 hours.

The calcined product obtained after the calcining, when left in the atmosphere, can change in quality by, for example, absorbing moisture or reacting to carbon dioxide. The calcined product obtained after the calcining is preferably moved and stored under demoistured inert gas atmosphere when a temperature drops lower than 200°C while decreasing the temperature after the calcining.

Thus, the lithium ion-conducting oxide according to the present invention can be obtained.

The lithium ion-conducting oxide according to the present invention shows an excellent lithium ion conductivity and can be preferably used as it is, or as a sintered body that has been shaped and sintered, or as a solid electrolyte, and can be suitably used as a solid electrolyte for an all-solid-state battery, particularly as a solid electrolyte for a lithium-ion secondary battery. The all-solid-state battery according to the present invention preferably has a solid electrolyte composed of the lithium ion-conducting oxide according to the present invention described above, and can also have an electrode material including the lithium ion-conducting oxide according to the present invention such as a composite electrode in which the solid electrolyte and a positive electrode or a negative electrode are integrated.

### (Lithium-ion secondary battery)

Examples of one of the preferable embodiments of the lithium ion-conducting oxide according to the present invention include the utilization for a lithium-ion secondary battery as the solid electrolyte. The lithium-ion secondary battery according to the present invention is preferably an all-solid-state battery in which the lithium ion-conducting oxide according to the present invention described above is used as it is, or as a sintered body that has been shaped and sintered, or as a solid electrolyte, and also preferably has an electrode material or an electrode including the lithium ion-conducting oxide according to the present invention described above.

The structure of the lithium-ion secondary battery is not particularly limited and, for example, in the case of a solid battery with a solid electrolyte layer, the battery has a structure in which a positive electrode collector, a positive electrode layer, a solid electrolyte layer, a negative electrode layer, and a negative electrode collector are laminated in this order.

The positive electrode collector and the negative electrode collector are not particularly limited as long as a material thereof conducts electrons without causing an electrochemical reaction. For example, these are constituted of a conductor such as a simple and an alloy of metals such as copper, aluminum, and iron or a conductive metal oxide such as an antimony-doped tin oxide (ATO), and a tin-doped indium oxide (ITO). Also usable is a collector in which a conductive adhesive layer is provided on the surface of a conductor. The conductive adhesive layer can be constituted by including, for example, a particulate conductive material and/or a fibrous conductive material.

The positive electrode layer and the negative electrode layer can be obtained by a known powder molding method. For example, a positive electrode collector, a powder for a positive electrode layer, a powder for a solid electrolyte layer, a powder for a negative electrode layer, and a negative electrode collector are superimposed in this order and powder-molded simultaneously, whereby the layer formation of the positive electrode layer, the solid electrolyte layer, and the negative electrode layer, respectively and the connection between the positive electrode collector, the positive electrode layer, the solid electrolyte layer, the negative electrode layer, and negative electrode collector respectively can be simultaneously achieved. Alternatively, each layer can also be powder-molded sequentially. The obtained powder-molded products can be heat-treated such as calcining as needed.

Examples of the powder-molding method include a method includes a method in which a solvent is added to a powder to form a slurry, the slurry is applied to a collector, dried, and then pressurized (doctor blade method), a method includes a method in which a slurry is put in a liquid-absorbing mold, dried, and then pressurized (casting method), a method includes a method in which a powder is put in a mold of a predetermined shape and compression-molded (metallic molding method), an extrusion method includes a method in which a slurry is extruded from a die and molded, a centrifugal force method includes a method in which a powder is compressed and molded by a centrifugal force, a roll molding method includes a method in which a powder is fed to a roller press machine and roll-molded, cold isostatic pressing includes a method in which a powder is put in a flexible bag of a predetermined shape and the bag is put in a pressure medium to which isotropic pressure is applied, and hot isostatic pressing includes a method in which a powder is put in a container of a predetermined shape, a vacuum state is created, and isotropic pressure is applied to the container at a high temperature by a pressure medium.

Examples of the metallic molding method include a single-action pressing method includes a method in which a powder is put in a fixed lower punch and a fixed die, and pressure is applied to the powder by a movable upper punch, a double-action pressing method includes a method in which a powder is put in a fixed die, and pressure is applied to the powder by a movable lower punch and a movable upper punch, a floating die method includes a method in which a powder is put in a fixed lower punch and a movable die, a pressure is applied to the powder by a movable upper punch, and when the pressure reaches higher than a predetermined value, the movable die is moved so that the fixed lower punch relatively enters inside the movable die, and a withdrawal method includes a method in which a powder is put in a fixed lower punch and a movable die, and pressure is applied to the powder by a movable upper punch while simultaneously the movable die is moved so that the fixed lower punch relatively enters inside the movable die.

The thickness of the positive electrode layer is preferably 10 to 200 µm, more preferably 30 to 150 µm, and further preferably 50 to 100 µm. The thickness of the solid electrolyte layer is preferably 50 nm to 1000 µm, and more preferably 100 nm to 100 µm. The thickness of the negative electrode layer is preferably 10 to 200 µm, more preferably 30 to 150 µm, and further preferably 50 to 100 µm.

### (Active material)

Examples of the active material for the negative electrode include those containing at least one selected from the group consisting of lithium alloys, metal oxides, graphites, hard carbons, soft carbons, silicon, silicon alloys, silicon oxides SiOₙ (0<n≤2), silicon/carbon composites, composites in which silicon is enclosed in pores of a porous carbon, lithium titanates, and graphites covered with a lithium titanate. The silicon/carbon composites and the composites in which a silicon domain is enclosed in pores of a porous carbon have a high specific capacity thereby to enhance an energy density and a battery capacity, hence preferable. More preferable is composites enclosing a silicon domain in pores of a porous carbon which have excellent volume expansion relaxation associated with the lithium occlusion/release of silicon and are capable of maintaining a good balance among the macro conductivity, the micro conductivity, and the ion conductivity in a composite electrode material or an electrode layer. Particularly preferable is composites in which a silicon domain is enclosed in pores of a porous carbon, wherein the silicon domain is amorphous, the size of the silicon domain is 10 nm or less, and pores derived from a porous carbon are present near the silicon domain.

Examples of the active material for the positive electrode include those containing at least one selected from the group consisting of LiCo oxide, LiNiCo oxide, LiNiCoMn oxide, LiNiMn oxide, LiMn oxide, LiMn spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, lithium metal phosphate, transition metal oxide, titanium sulfide, graphite, hard carbon, transition metal-containing lithium nitride, silicon oxide, lithium silicate, lithium metal, lithium alloy, Li-containing solid solutions, and lithium storable intermetallic compounds. LiNiCoMn oxide, LiNiCo oxide, or LiCo oxide is preferred, and LiNiCoMn oxide is more preferred. This is because this active material has good affinity to a solid electrolyte and excellent balance among the macro conductivity, the micro conductivity, and the ion conductivity. Additionally, these active materials have a high average potential thereby to enhance an energy density and a battery capacity in the balance between the specific capacity and the stability. The active materials for the positive electrode can also have the surface covered with, for example, lithium niobate, lithium phosphate, or lithium borate, which is an ion-conductive oxide.

The active material in an embodiment of the present invention is preferably a particulate. The 50% diameter in the volume-based particle size distribution thereof is preferably 0.1 µm or more and 30 µm or less, more preferably 0.3 µm or more and 20 µm or less, further preferably 0.4 µm or more and 10 µm or less, and most preferably 0.5 µm or more and 3 µm or less. Additionally, a ratio of a length of the major axis to a length of the minor axis (length of major axis/length of minor axis), that is, the aspect ratio, is preferably less than 3, and more preferably less than 2.

The active material in an embodiment of the present invention may form secondary particles. In such an instance, the 50% diameter in the number-based particle size distribution of the primary particles is preferably 0.1 µm or more and 20 µm or less, more preferably 0.3 µm or more and 15 µm or less, further preferably 0.4 µm or more and 10 µm or less, and most preferably 0.5 µm or more and 2 µm or less. When an electrode layer is formed by compression molding, the active material is preferably the primary particle. When the active material is the primary particle, the electron conduction path or the hole conduction path is less likely to be impaired even when compression-molded.

### Examples

Hereinafter, the present invention will be further specifically described with reference to the Examples, but it should be understood that the present invention is not limited only to the Examples.

### [Example 1]

### ∘ Preparation of a lithium ion-conducting oxide (1) (20% Si-doped)

A lithium ion-conducting oxide (1), which includes lithium, tantalum, phosphorus, silicon, and oxygen as constituent elements wherein a ratio of number of silicon atoms in the total of silicon and phosphorus is 20%, is prepared. The intended lithium ion-conducting oxide (1) is a lithium ion-conducting oxide, wherein the oxide represented by LiTa₂PO₈ has 20% of the number of P atoms replaced with Si, and y in the formula Li₁₊ₓTa₂P_{1-y}Si_{y}O₈ (x is charge balance associated with replacing P with Si) is 0.2.

Using lithium carbonate (Li₂CO₃) (manufactured by Sigma-Aldrich Co. LLC, purity 99.0% or more), tantalum pentoxide (Ta₂O₅) (manufactured by FUJIFILM Wako Pure Chemical Corporation, purity 99.9%), silicon dioxide (SiO₂) (manufactured by FUJIFILM Wako Pure Chemical Corporation, purity 99.9%), diammonium hydrogen phosphate ((NH₄)₂HPO₄) (manufactured by Sigma-Aldrich Co. LLC, purity 98% or more) as raw materials, each of the raw materials was weighed in a feeding composition ratio of Li : Ta : P : Si = 1.38 : 2.00 : 0.852 : 0.2 in consideration of the Li desorption amount, charge balance x, and production inhibitory effect of by-products (LiTaO₃) caused during calcining so that the ratio of number of lithium, tantalum, phosphorus, and silicon atoms (Li : Ta : P : Si) after calcining was 1+x : 2 : 0.8 : 0.2.

Each of the weighed raw material powders was crushed and mixed for 2 hours using a zirconia ball mill (zirconia ball: diameter 1 mm) with the addition of a suitable amount of toluene.

The obtained mixture was put in an alumina boat and calcined for 2 hours at 1000°C while the temperature was increased to 1000°C at a rate of temperature increase of 10°C/min under an air (gas flow rate 100 mL/min) atmosphere using a rotary calcining furnace (manufactured by Motoyama).

A suitable amount of toluene was added to the primary calcined product obtained by calcining, and the primary calcined product was crushed and mixed for 2 hours using a zirconia ball mill (zirconia ball: diameter 1 mm) thereby to obtain a pulverized product.

The obtained pulverized product was preliminary molded in a hydraulic press at 40 MPa and then finally molded at 300 MPa by cold isostatic press molding (CIP) thereby to obtain a pellet having a diameter of 10 mm and a thickness of 1 mm. The obtained pellets were put in an alumina boat and the temperature was increased to 1100°C at a rate of temperature increase of 10°C/min under an air atmosphere (gas flow rate 100 mL/min) and calcined for 3 hours at 1100°C using a rotary calcining furnace (manufactured by Motoyama) thereby to obtain a secondary calcined product.

After the temperature was decreased, the obtained secondary calcined product was taken out at room temperature, placed under a demoistured nitrogen atmosphere, thereby to obtain a lithium ion-conducting oxide (1), wherein a ratio of number of silicon atoms in the total of silicon and phosphorus was 20%.

### • NMR Spectrum measurement

Using the lithium ion-conducting oxide (1) obtained above as a sample, a 4 mm CP/MAS probe was attached to a nuclear magnetic resonance spectrometry (NMR; manufactured by Bruker Corporation, AV500NMR) to carry out the measurement at room temperature.

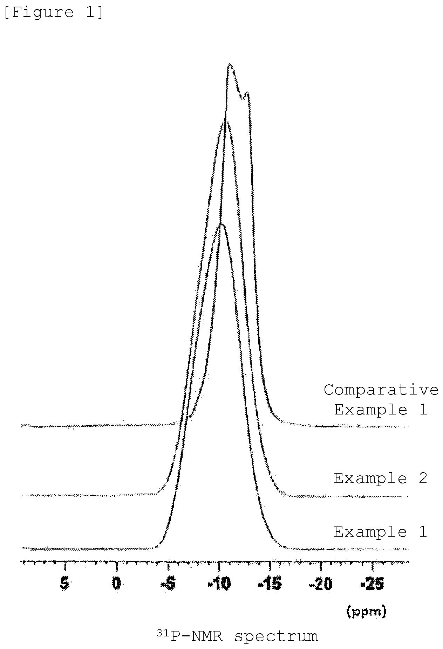

The solid-state ³¹P-NMR spectrum was measured using the single pulse method under the conditions of 90°, a pulse of 4 µs, and magic angle spinning frequencies of 10 kHz. The chemical shift was obtained by using ammonium dihydrogen phosphate as external reference (1.0 ppm). The measurement range was from -125 to 125 ppm. The measurement result is shown in Figure 1.

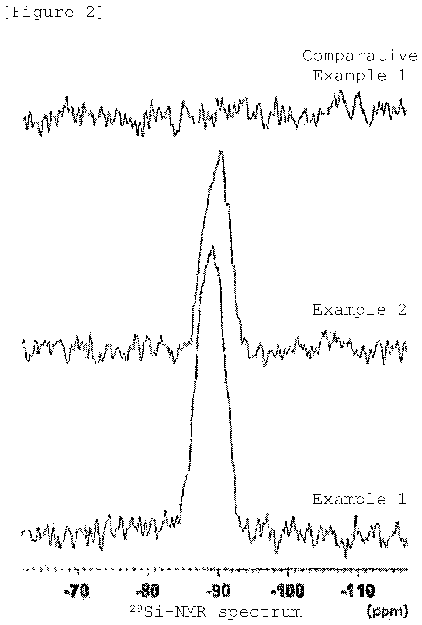

Further, the solid-state ²⁹Si-NMR spectrum was measured using the single pulse method under the conditions of 90°, a pulse of 4 µs, and magic angle spinning frequencies of 7 kHz. The chemical shift was obtained by using hexamethylcyclotrisiloxane as external reference (-9.7 ppm). The measurement range was from -240 ppm to 110 ppm. The measurement result is shown in Figure 2.

### • Content rate of a monoclinic crystal structure

The powder X-ray diffraction measurement (XRD) of the lithium ion-conducting oxide (1) was carried out using a powder X-ray diffractometer PANalytical MPD (manufactured by Spectris Co., Ltd.). The measurement was carried out under the X-ray diffraction measurement conditions of using Cu-Kα ray (output 45 kV, 40 mA) in a range of a diffraction angle 2θ = 10 to 50°, thereby to obtain an X-ray diffraction pattern of the lithium ion-conducting oxide (1).

The obtained XRD pattern was subjected to the Rietveld analysis using a known analysis software RIETAN-FP (obtainable from the creator; website of Fujio Izumi "RIETAN-FP·VENUS system distribution file" (http://fujioizumi.verse.jp/download/download.html)) to determine the amount of monoclinic crystal and the amount of crystal other than monoclinic crystal, and the calculated monoclinic crystal content rate was 96.8%.

### • Ion conductivity evaluation

### (Preparation of measurement pellets)

Measurement pellets for the ion conductivity evaluation of the lithium ion-conducting oxide were prepared as follows. The obtained lithium ion-conducting oxide (1) was molded into a disc shape having a diameter of 10 mm and a thickness of 1 mm using a tablet molding machine and calcined at 1100°C for 3 hours under air atmosphere. The obtained calcined product had a relative density of 96.3% to the theoretical density. Gold layers were formed using a spattering machine on both faces of the obtained calcined product thereby to obtain measurement pellets for the ion conductivity evaluation.

### (Impedance measurement)

The ion conductivity evaluation of the ion-conducting oxide (1) was carried out as follows. The measurement pellets prepared by the method described above were retained at 25°C for 2 hours before the measurement. Then, AC impedance measurement was carried out at 25°C using an impedance analyzer (manufactured by Solartron Analytical, Model No: 1260A) in a frequency range of 1 Hz to 10 MHz at an amplitude of 25 mV. The obtained impedance spectra were fit to equivalent circuits using an equivalent circuit analysis software ZView attached to the equipment thereby to obtain ion conductivities inside the crystal grains and at the grain boundaries, and lithium ion conductivity in total respectively. The determined ion conductivities are each collectively shown in Table 1.

### [Example 2]

### • Preparation of a lithium ion-conducting oxide (2) (15% Si-doped)

A lithium ion-conducting oxide (2) wherein a ratio of number of silicon atoms in the total of silicon and phosphorus is 15% was obtained in the same manner as in Example 1, with the exception that an amount of each raw material used in the preparation of the lithium ion-conducting oxide of Example 1 was changed. Each raw material herein was weighed in a feeding composition ratio of Li : Ta : P : Si = 1.32 : 2.00 : 0.900 : 0.15 and used in consideration of the Li desorption amount, charge balance x, and production inhibitory effect of by-products (LiTaO₃) caused during calcining so that the ratio of number of lithium, tantalum, phosphorus, and silicon atoms (Li : Ta : P : Si) after calcining was 1+x : 2 : 0.85 : 0.15.

### • NMR Spectrum measurement

The obtained lithium ion-conducting oxide (2) was measured for the solid-state ³¹P-NMR spectrum and the solid-state ²⁹Si-NMR spectrum in the same manner as in Example 1. Figure 1 shows the measurement result on the solid-state ³¹P-NMR spectrum, and Figure 2 shows the measurement result on the solid-state ²⁹Si-NMR spectrum, respectively.

### • Monoclinic crystal structure content rate, ion conductivity evaluation

The obtained lithium ion-conducting oxide (2) was determined for the monoclinic crystal structure content rate and evaluated the ion conductivity in the same manner as Example 1. Table 1 shows the monoclinic crystal content rate, ion conductivities inside the crystal grains and at the grain boundaries, and lithium ion conductivity in total, respectively.

### [Comparative Example 1]

### ∘ Preparation of a lithium ion-conducting oxide (3) (no Si-doped)

A lithium ion-conducting oxide (3) represented by LiTa₂PO₈ was obtained in the same manner as in Example 1, with the exception that an amount of each raw material used in the preparation of the lithium ion-conducting oxide of Example 1 was changed. Each raw material herein was weighed in a feeding composition ratio of Li : Ta : P : Si = 1.15 : 2.00 : 1.065 : 0 and used in consideration of the Li desorption amount, charge balance x, and production inhibitory effect of by-products (LiTaO₃) caused during calcining so that the ratio of number of lithium, tantalum, phosphorus, and silicon atoms (Li : Ta : P : Si) after calcining was 1 : 2 : 1 : 0.

### • NMR Spectrum measurement

The obtained lithium ion-conducting oxide (3) was measured for the solid-state ³¹P-NMR spectrum and the solid-state ²⁹Si-NMR spectrum in the same manner as in Example 1.

Figure 1 shows the measurement result on the solid-state ³¹P-NMR spectrum, and Figure 2 shows the measurement result on the solid-state ²⁹Si-NMR spectrum, respectively.

### • Monoclinic crystal structure content rate, ion conductivity evaluation

The obtained lithium ion-conducting oxide (3) was determined for the monoclinic crystal structure content rate and evaluated the ion conductivity in the same manner as in Example 1. Table 1 shows the monoclinic crystal content rate, ion conductivities inside the crystal grains and at the grain boundaries, and lithium ion conductivity in total, respectively.

**[Table 1]**

| | Si Doped amount | | Monoclinic crystal content rate (%) | Lithium ion conductivity (S·cm⁻¹) | | |
|---|---|---|---|---|---|---|
| | Si/(Si+P) ×100(%) | y | | Inside crystal grain | Crystal boundary | Total |
| Example 1 | 20 | 0.20 | 96.8 | 1.24×10⁻³ | 3.82×10⁻³ | 9.39×10⁻⁴ |
| Example 2 | 15 | 0.15 | 97.5 | 1.47×10⁻³ | 2.59×10⁻³ | 9.38×10⁻⁴ |
| Comparative Example 1 | 0 | 0.00 | 100.0 | 2.05×10⁻³ | 2.70×10⁻⁵ | 2.67×10⁻⁵ |

The above results from Examples and Comparative Example reveal that the lithium ion-conducting oxide, which includes at least lithium, tantalum, phosphorus, silicon, and oxygen as constituent elements, which has a peak in a region of - 20.0 ppm to 0.0 ppm on the solid-state ³¹P-NMR spectrum, and a peak in a region of -80.0 ppm to -100.0 ppm on the solid-state ²⁹Si-NMR spectrum, is excellent in lithium ion conductivity.

### Industrial Applicability

The lithium ion-conducting oxide of the present invention is preferable for a solid electrolyte, a sintered body, and an electrode material or a raw material thereof, and can be particularly preferably used as a solid electrolyte for a lithium-ion secondary battery.

## Claims

1. A lithium ion-conducting oxide, comprising:
at least lithium, tantalum, phosphorus, silicon, and oxygen as constituent elements,
wherein the lithium ion-conducting oxide has a peak in a region of -20.0 ppm to 0.0 ppm on a solid-state ³¹P-NMR spectrum, and
wherein the lithium ion-conducting oxide has a peak in a region of -80.0 ppm to -100.0 ppm on a solid-state ²⁹Si-NMR spectrum.

2. The lithium ion-conducting oxide according to claim 1, wherein the lithium ion-conducting oxide has only one peak in a region of -20.0 ppm to 0.0 ppm on the solid-state ³¹P-NMR spectrum.

3. The lithium ion-conducting oxide according to claim 1 or 2, wherein a content rate of a monoclinic crystal structure determined by an X-ray diffraction measurement method is 70% or more.

4. A solid electrolyte composed of the lithium ion-conducting oxide according to any one of claims 1 to 3.

5. A sintered body composed of the lithium ion-conducting oxide according to any one of claims 1 to 3.

6. An electrode material or an electrode comprising the lithium ion-conducting oxide according to any one of claims 1 to 3.

7. An all-solid-state battery comprising the lithium ion-conducting oxide according to any one of claims 1 to 3.
